Europäisches Patentamt

European Patent Office

Office européen des brevets

(19)

(11) **EP 1 170 056 A1**

(12) # DEMANDE DE BREVET EUROPEEN

(43) Date de publication:
**09.01.2002 Bulletin 2002/02**

(51) Int Cl.⁷: **B01J 31/26**, B01J 20/22, G02B 6/44

(21) Numéro de dépôt: **01401725.5**

(22) Date de dépôt: **28.06.2001**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | (72) Inventeur: **Trouve, Gérard**<br>**81100 Castres (FR)** |
| (30) Priorité: **05.07.2000 FR 0008762** | (74) Mandataire: **Conan, Philippe Claude et al**<br>**L'Air Liquide D.S.P.I. 75, quai d'Orsay**<br>**75321 Paris Cedex 07 (FR)** |
| (71) Demandeur: **SOCIETE D'EXPLOITATION DE PRODUITS POUR LES INDUSTRIES CHIMIQUES-SEPPIC**<br>**F-75321 Paris Cédex 07 (FR)** | |

(54) **Composition absorbant l'hydrogène, procédé de préparation et utilisation comme remplissage de câbles à fibres optiques**

(57)　Composition caractérisée en ce qu'elle comprend un composé ou un mélange de composés hydrocarbonés, une proportion non nulle d'un ou plusieurs métaux de transition et une proportion non nulle d'au moins une phase grasse liquide dispersante légèrement polaire, ayant une ou plusieurs chaînes hydrocarbonées, de HLB compris entre 0.5 et 9, de préférence entre 4 et 9. Son procédé de préparation et son utilisation comme composition de remplissage des câbles à fibres optiques.

**EP 1 170 056 A1**

## Description

L'invention a pour objet de nouvelles compositions absorbant l'hydrogène, contenant des agents dispersants et leur utilisation dans la fabrication de câbles à fibres optiques.

Les fibres optiques, qui permettent la transmission d'une quantité d'informations de plus en plus élevée, sont disposées dans des câbles susceptibles d'être soumis à des contraintes mécaniques et chimiques importantes, en particulier quand il s'agit de câbles sous-marins. Pour limiter les effets de ces contraintes, les fibres sont protégées par des gaines de métal ou de plastique et sont "immergées" dans des graisses qui contribuent à amortir les chocs et à limiter les microcourbures qui en résultent et qui perturbent la transmission des signaux. Ces microcourbures sont aussi provoquées par l'apparition de microbulles d'hydrogène, qui se forment à l'intérieur de la graisse, au moment de la fabrication du câble, lors des opérations de soudage ou au cours du temps comme effet de vieillissement. C'est pourquoi certaines graisses actuellement commercialisées contiennent des composés qui absorbent l'hydrogène.

Ainsi la demande de brevet français publiée sous le numéro 2.607.311, divulgue une composition thixotropique hydrophobe destinée à la fabrication de câbles à fibres optiques comprenant 100 parties en poids d'un fluide lubrifiant constitué de 30% à 100% en poids de polybutène, de préférence hydrogéné ayant une masse moléculaire moyenne en nombre compris entre 280 et 800 et de 0% à 70% en poids d'au moins un lubrifiant liquide choisi parmi les huiles minérales, les huiles synthétiques et les silicones et 7 à 20 parties en poids d'un agent thixotropique hydrophobe, choisi parmi une silice hydrophobe ou une bentonite hydrophobe. Pour améliorer la dispersion des silices ou bentonites, il est divulgué dans la demande de brevet l'utilisation d'un agent polaire tel que le carbonate de propylène. La demande de brevet britannique, publiée sous le numéro 2.144.559, divulgue des compositions absorbant l'hydrogène pour câbles à fibres optiques, contenant du polybutène, des hydrocarbures aromatiques, du palladium ou du charbon actif. Le brevet américain, publié sous le numéro 4,688,889, divulgue des compositions absorbant l'hydrogène pour le remplissage des câbles à fibres optiques comprenant le mélange d'une silicone insaturée avec un catalyseur choisi parmi les métaux de transitions, les sels organiques des métaux de transition ou les composés organométalliques desdits métaux et plus spécifiquement la poudre de palladium, la poudre de platine, la poudre de nickel, le fer pentacarbonyle ou l'acide chloroplatinique, lesdits métaux étant éventuellement supportés sur des composés inertes comme le noir de carbone animal ou végétal. Le brevet américain publié sous le numéro 4,741,592, divulgue des compositions absorbant l'hydrogène pour le remplissage de câbles à fibres optiques comprenant le mélange d'un polymère insaturé obtenu par la polymérisation de diènes conjugués, avec un catalyseur choisi parmi les métaux de transitions, les sels organiques des métaux de transition ou les composés organométalliques desdits métaux et plus spécifiquement la poudre de palladium, la poudre de platine, la poudre de nickel, le fer pentacarbonyle ou le chromite ce cuivre, lesdits métaux étant éventuellement supportés sur des composés inertes comme le noir de carbone animal ou végétal. La demande brevet européen publiée sous le numéro EP 0 632 301, divulgue des compositions absorbant l'hydrogène pour le remplissage de câbles à fibres optiques comprenant le mélange d'un composé hydrocarboné insaturé, par exemple, le polybutène ou les copolymères propylène - éthylène, propylène - butène et propylène - hexène le terpolymère propylène - butène - éthylène, le ricinoléate de glycéryle, l'huile de résine, avec un catalyseur choisi parmi les métaux de transitions, les sels organiques des métaux de transition ou les composés organométallique desdits métaux et plus spécifiquement la poudre de palladium, la poudre de platine, la poudre de nickel ou le fer pentacarbonyle, lesdits métaux étant éventuellement supportés sur des composés inertes. La demande de brevet français publiée sous le numéro 2.763.955, divulgue une composition de remplissage de câbles à fibres optiques comprenant de 75% à 95% en poids d'un bisphénol propoxylé, de poids moléculaire inférieur à 3000, de 5% à 25 % en poids d'un agent thixotropique et de 0,1% à 1 % en poids d'un agent antioxydant.

Les composés à base de palladium se présentent sous forme de poudres très fines d'une dizaine de microns de diamètre, et de grande surface spécifique. Or, ces poudres se dispersent difficilement de façon homogène et ont tendance à former des agglomérats dans les graisses, ce qui réduit la surface spécifique globale du catalyseur et donc l'efficacité de la graisse pour absorber l'hydrogène. Au contraire, à efficacité égale, une bonne dispersion du catalyseur dans la graisse permet d'utiliser des quantités plus faibles de catalyseurs et donc de diminuer le prix de revient de ces graisses. C'est pourquoi la demanderesse a cherché à développer de nouvelles compositions, dans lesquelles les poudres de catalyseur se dispersaient de façon plus homogène que dans celles de l'état de la technique.

L'invention a pour objet, une composition caractérisée en ce qu'elle comprend un composé ou un mélange de composés hydrocarbonés et/ou siliconés, une proportion non nulle d'un ou de plusieurs métaux de transition et une proportion non nulle d'au moins une phase grasse liquide dispersante légèrement polaire, ayant une ou plusieurs chaînes hydrocarbonées, de HLB compris entre 0.5 et 9, de préférence entre 4 et 9.

Par composé ou mélange de composés hydrocarbonés et/ou siliconés, on désigne notamment, les hydrocarbures, les polymères hydrocarbonés, les huiles de silicone et/ou les dérivés de polyols.

La composition objet de la présente invention comprend généralement de 50% à 90% en poids de composé ou de mélange de composés hydrocarbonés et/ou siliconés.

Comme hydrocarbures ou polymères hydrocarbonés, il y a par exemple les poly - alpha - oléfines (PAO) ou copolymères d'alpha - oléfines comportant de 8 à 12 atomes de carbone, le polyisobutène (PIB) ou polybutène, obtenu par polymérisation de l'isobutène, du 1-butène et/ou du 2-butène, les copolymères propylène - éthylène, propylène - butène et propylène hexène, les terpolymères propylène - butène - éthylène ou les polybutadiènes. Les huiles de silicones peuvent être choisies parmi les poly (alkyl siloxanes), en particulier les poly (diméthyl siloxanes) de hauts poids moléculaires ayant une viscosité de l'ordre de 10 000 à 30 000 cSt. à température ambiante. Les dérivés de polyols sont obtenus par éthérication ou estérification d'un composé ayant plusieurs fonctions hydroxyle, comme par exemple le glycérol, le TMP ou le bisphénol, au moyen de chaînes grasses hydrocarbonées ou alkoxydes tels que polyéthylène glycol, le polypropylène glycol ou polybutylèneglycol.

La composition objet de la présente invention comprend aussi un ou plusieurs catalyseurs métalliques en une proportion pondérale allant jusqu'à 5% en poids de ladite composition. Comme exemples de composés métalliques appropriés à la présente invention, il y a, par exemple, les métaux de transitions, les sels organiques des métaux de transition ou les composés organométalliques desdits métaux et plus spécifiquement la poudre de palladium, la poudre de platine, la poudre de nickel, le fer pentacarbonyle, l'acide chloroplatinique, le chromite ce cuivre, le nickel Raney, le palladium supporté sur charbon actif, le palladium supporté sur alumine, le platine supporté sur alumine ou le platine supporté sur charbon actif.

Selon une variante particulière de la présente invention, la composition comprend jusqu'à 1% en poids de palladium supporté sur alumine ou sur charbon actif.

La composition objet de la présente invention, comprend aussi jusqu'à 15% en poids de silice. On peut utiliser de la silice traitée hydrophobe telle que par exemple, l' Aerosil™ R974, mais la silice préférée est la silice hydrophile, par exemple de la silice pyrogénée hydrophile, telle que celle commercialisée sous le nom d'Aerosil™ 200 ou de la silice colloïdale hydrophile, telle que celle commercialisée sous le nom de CabO-Sil™ TS 720.

La composition objet de la présente invention, comprend éventuellement, jusqu'à 5% environ d'un polymère viscosant. Comme exemples de polymère viscosant, il y a les polymères de styrène, d'éthylène, de propylène, de butylène, de butadiène ou des copolymères di-block de ces monomères tels que les polystyrène - polyéthylène , polystyrène - [polyéthylène+polypropylène], polystyrène - polyisoprène , polystyrène - polybutène, ou encore des polymères tri-block comme les polystyrène - polyéthylène - polystyrène, polystyrène - [polyéthylène+polypropylène]-polystyrène, polystyrène - polyisoprène - polystyrène , polystyrène-polybutadiène - polystyrène. Des polymères de ce type sont commercialisés sous les noms de marque Kraton™ G ou Kraton D, Septon™ ou encore Shellvis™.

La composition objet de la présente invention comprend éventuellement, jusqu'à 2% environ d'un agent antioxydant, choisi par exemple, parmi les composés à structure phénolique stériquement encombrée, tels que le 2,2,4-triméthyl 1,2-dihydroquiniline polymérique, le phénothiazine, le (3,5-di tert - butyl 4-hydroxy phényl) propionate d'octyle, l'éther monométhylique de l'hydroquinone ou le triéthylèneglycol bis[3-(3'-tert butyl 4'-hydroxy 5'-méthyl phényl) propionate] commercialisé sous le nom d'Irganox ™ 245 ou l'éthylène bis(oxyéthylène) bis(3-tert butyl 4-hydroxy 5-méthyl hydrocinnamate), l'Irganox™ 1076 ou l'Irganox™ 1010.

Par phase grasse liquide dispersante légèrement polaire ayant une ou plusieurs chaînes hydrocarbonées, de HLB compris entre 0.5 et 9, de préférence entre 4 et 9, on entend de préférence les phases grasses liquides à température ambiante.

Le nombre HLB, ou balance hydrophilie - lipophilie, et sa méthode de détermination sont connus de l'homme du métier. Ce paramètre permet d'apprécier les caractères hydrophobe et hydrophile d'un agent tensioactif donné. Dans le cadre de la présente invention, pour les agents tensioactifs à fonction ester, il est déterminé par la formule suivante :

$$HLB = 20 \times [1 - (IS/IA)],$$

dans laquelle IS représente l'indice de saponification du produit mesuré selon la norme NFT 60206 et IA représente l'indice d'acide des acides précurseurs mesuré selon la norme NFT 60204.

Dans le cas des agents tensioactifs à fonction éther, le HLB est calculé par l'équation :

$$HLB = 20 \times (M_h/M)$$

dans laquelle $M_h$ est la masse de la partie hydrophile de la molécule et M sa masse moléculaire totale.

La composition objet de la présente invention comprend de 1% à 20% et de préférence, entre 5% et 10% en poids de phase grasse dispersante.

Selon un autre aspect particulier de la présente invention, le rapport pondéral entre le ou les catalyseurs métalliques et la phase grasse dispersante dans la composition, est compris entre environ 0,01 et 0,20.

Comme phase grasse dispersante légèrement polaire appropriée à la présente invention, il y a les huiles végétales, telles que par exemple, l'huile de tournesol, l'huile de colza, l'huile de maïs, l'huile de soja, l'huile de ricin, l'huile de lin, l'huile de coprah, l'huile d'arachide, l'huile d'olive, l'huile de palme ou l'huile de palme hydrogénée ou les huiles végétales modifiées telles que les esters méthyliques d'huiles végétales, les monoglycérides ou les diglycérides obtenus par hydrolyse ménagée des huiles végétales, les huiles végétales faiblement alcoxylées, en particulier les huiles végétales faiblement éthoxylées et/ou propoxylées, plus particulièrement, les huiles végétales éthoxylées contenant de 1 à 10 motifs d'oxyde d'éthylène, les esters méthyliques d'huiles végétales faiblement alcoxylés, en particulier les esters méthyliques d'huiles végétales faiblement éthoxylés et/ou propoxylés, et plus particulièrement, les esters méthyliques d'huiles végétales éthoxylés avec 1 à 4 oxydes d'éthylène. La préparation de ces huiles végétales modifiées est décrite dans les demandes internationales de brevet publiées sous les numéros WO 96/22109 et WO 00/01233.

Par faiblement alcoxylés, on indique dans ce qui précède et ce qui suit que l'indice d'alcoxylation, et notamment les indices d'éthoxylation et de propoxylation, qui représentent respectivement le nombre de motifs éthoxyle (indice d'OE) et le nombre de motifs propoxyle (indice d'OP) par molécule, est inférieur ou égal à environ 15 [indice d'OE = 15 ou indice d'OP = 15 ou (indice d'OE + indice d'OP) = environ 15].

Comme autre phase grasse dispersante liquide légèrement polaire appropriée à la présente invention, il y a les agents tensioactifs ayant un nombre HLB compris entre 1 et 9, de préférence entre 4 et 9, miscibles aux huiles qui entrent dans la composition des graisses. Il y a par exemple, les alcools gras ou les acides gras linéaires ou ramifiés, comportant de 5 à 30 atomes de carbone, et plus particulièrement de 12 à 22 atomes de carbone, les esters desdits acides, lesdits alcools, acides ou esters étant éventuellement faiblement alkoxylés. Parmi ceux-ci, on préfère les agents tensioactifs liquides à température ambiante, tels que ceux comportant une chaîne oléique, oléocétylique, linoléique ou béhènique. Ces composés sont éventuellement faiblement alkoxylés. Comme exemples d'agents tensioactifs de cet ordre, il y a les esters oléiques de sorbitol, les alcools oléiques contenant de 1 à 5 motifs d'oxyde d'éthylène (OE = 5), les oléates de polyéthylèneglycol (PEG), contenant de 1 à 5 motifs d'oxyde d'éthylène (1 ≤ OE ≤ 5), les éthers de glucose liquides ou l'acide oléique contenant de 1 à 5 motifs d'oxyde d'éthylène.

Selon un autre aspect de la présente invention, celle-ci a pour objet un procédé d'obtention de la composition telle que définie précédemment comprenant une étape de dispersion du catalyseur dans l'agent dispersant tel que défini ci-dessus, suivi du mélange de la dispersion dans les autres constituants de la composition objet de la présente invention.

Le procédé tel que défini ci-dessus est une voie préférée mais il est possible de mélanger la phase dispersante aux huiles de la graisse, d'ajouter la poudre de palladium puis les autres composants.

Selon un dernier aspect de la présente invention, celle-ci a pour objet l'utilisation de la composition telle que définie précédemment, comme composition de remplissage de câbles à fibres optiques.

Les exemples suivants illustrent l'invention sans toutefois la limiter.

### A) Mise en évidence de l'influence de la phase grasse dispersante sur la quantité d'hydrogène absorbée par la composition

Les exemples des tableaux 1a à 1e, sont obtenus à partir d'une graisse modèle constituée de :

- 5 ou 10 % en poids d'une phase grasse dispersante (appelée PGD)
- 3.8 % en poids d'un polymère viscosant (Shellvis™ 40),
- 6.5% en poids de silice hydrophile (Cab-O-Sil™ TS 720),
- 0.4% d'un antioxydant (Irganox™ 1076)
- 0.6% de catalyseur Palladium supporté sur alumine
- q.s.p. 100 % de poly alpha - oléfine (PAO)

Les caractéristiques mesurées des compositions sont les suivantes :

- La volatilité, après séjour dans une étuve à 150°C pendant 24H,
- Le relargage d'huile (exsudation), après séjour dans une étuve à 150°C pendant 24 heures,
- La viscosité à haut gradient de cisaillement (2500 Pa.s environ), mesurée sur un viscosimètre Carrimed avec un cône de 2 cm de diamètre et d'angle 2°.
- L'absorption d'hydrogène par gramme de graisse à 24 heures et à 48 heures, dans une cellule sous pression initiale de 400 mm de mercure en hydrogène à température ambiante.

Les résultats font apparaître que toutes les graisses formulées avec 5 à 10 % d'une phase grasse polaire, ont des viscosités, des exsudations et des volatilités proches de celles de la formule témoin, mais que l'absorption d'hydrogène est en revanche nettement améliorée. en particulier, lorsque la phase grasse dispersant a un nombre HLB voisin de 4 ou supérieur à 4. Les additifs ne possédant pas de longue chaîne grasse hydrocarbonée, comme le bisphénol A oxypropylé (exemple comparatif), donnent des résultats seulement très légèrement supérieurs à ceux du témoin.

Tableau 1a

| Exemples | | Témoin | Ex 1 |
|---|---|---|---|
| PGD (nature ; quantité en % ; HLB) | | aucune | Ester méthylique d'huile de colza ; 5% HLB = 0,5 |
| Volatilité | | 1,17 % | 4,16 % |
| Exsudation | | 0 % | 0 % |
| Viscosité plastique | | 0,90 Pa.s à 2534 Pa | 0,78 Pa.s à 2445 Pa |
| Pression de $H_2$ en mm Hg, Absorption d'$H_2$ en ml/g | à T = 0 h | 405 mm Hg (0) | 401 mm Hg (0) |
| | à T = 24 h | 322 mm Hg (1,08) | 204 mm Hg (3,27) |
| | à T = 48 h | 321 mm Hg (1,39) | 174 mm Hg (3,76) |

Tableau 1b

| Exemples | | Ex 2 | Ex 3 |
|---|---|---|---|
| PGD (nature ; quantité en % ; HLB) | | Alcool oléocétylique éthoxylé (20E) ; 5% ; HLB = 6 | Huile de colza ; 5% ; HLB = 0,5 |
| Volatilité | | 2,67 % | 1,81 % |
| Exsudation | | 0 % | 0 % |
| Viscosité plastique | | 0,81 Pa.s à 2093 Pa | 0,83 Pa.s à 2394 Pa |
| Pression de $H_2$ en mm Hg, Absorption d'$H_2$ en ml/g | à T = 0 h | 406 mm Hg (0) | 400 mm Hg |
| | à T = 24 h | 277 mm Hg (2,14) | 304 mm Hg (1,59) |
| | à T = 48 h | 246 mm Hg (2,65) | 277 mm Hg (2,04) |

Tableau 1c

| Exemples | | Ex 4 | Ex 5 |
|---|---|---|---|
| PGD (nature ; quantité en % ; HLB) | | Huile de mais éthoxylé (4OE) ; 5 % ; HLB = 5 | Acide oléique alkoxylé (5OE 40P 50E) ; 5% ; HLB = 3 |
| Volatilité | | 1,6 % | 2,01 % |
| Exsudation | | 0 % | 0 % |
| Viscosité plastique | | 0,90 Pa.s à 2125 Pa | 0,88 Pa.s à 2494 Pa |
| Pression de $H_2$ en mm Hg, Absorption d'$H_2$ en ml/g | à T = 0 h | 400 mm Hg | 405 mm Hg |
| | à T = 24 h | 304 mm Hg (1,7) | 299 mm Hg (1,76) |
| | à T = 48 h | 277 mm Hg (2,24) | 291 mm Hg (1,89) |

Tableau 1d

| Exemples | Ex 6 | Comparatif |
|---|---|---|
| PGD (nature ; quantité en %; HLB) | Acide oléique éthoxylé (5 OE) ; 5% ; HLB = 8,7 | Bisphénol A oxypropylé 10% ; HLB = 1 |
| Volatilité | 1,43 % | 1,71 % |

Tableau 1d   (suite)

| Exemples | | Ex 6 | Comparatif |
|---|---|---|---|
| Exsudation | | 0 % | 0, 06 % |
| Viscosité plastique | | 0,90 Pa.s à 2344 Pa | 0,91 Pa.s à 2394 Pa |
| Pression de $H_2$ en mm Hg, Absorption d'$H_2$ en ml/g | à T = 0 h | 402 mm Hg | 403 mm Hg |
| | à T = 24 h | 279 mm Hg (2,03) | 315 mm Hg (1,45) |
| | à T = 48 h | 249 mm Hg (2,53) | 309 mm Hg (1,55) |

Tableau 1e

| Exemples | | Ex 7 | Ex 8 |
|---|---|---|---|
| PGD (nature ; quantité en % ; HLB) | | Oléate de sorbitan ; 10% ; HLB = 4,3 | Acide oléique éthoxylé (10OE) ; HLB = 8,7 |
| Volatilité | | 2,22 % | 2,0 % |
| Exsudation | | 1,94 % | 0 % |
| Viscosité plastique | | 0,85 Pa.s à 1994 Pa | 0,89 Pa.s |
| Pression de $H_2$ en mm Hg, Absorption d'$H_2$ en ml/g | à T = 0 h | 403 mm Hg | 401 mm Hg |
| | à T = 24 h | 284 mm Hg (1,97) | 255 mm Hg (2,4) |
| | à T = 48 h | 249 mm Hg (2,54) | 221 mm Hg (2,97) |

**B) Mise en évidence de l'influence du rapport pondéral catalyseur / phase grasse dispersante, sur la quantité d'hydrogène absorbée par la composition**

Les exemples des tableaux 2a à 2c sont obtenus à partir d'une graisse modèle constituée de :

- 5 % en poids d'acide oléique éthoxylé (5OE) de HLB 8.7,
- 3.8 % en poids d'un polymère viscosant (Shellvis™ 40),
- 6.5% en poids de silice hydrophile (Cab-O-Sil™ TS720),
- 0% à 0,6% de catalyseur palladium supporté sur alumine
- q.s.p. 100 % de poly alpha - oléfine (PAO)

Dans tous les cas, les quantités d'hydrogène absorbées en 48h sont supérieures à celles absorbées par le témoin ne contenant pas de phase dispersante tout en contenant 0.6% de catalyseur.

Tableau 2a

| Exemples | | Témoin | Ex. 9 |
|---|---|---|---|
| Rapport pondéral catalyseur/PGD | | 0 | 0,04 |
| Catalyseur (% pondéral) | | 0 % | Pd / $Al_2O_3$ ; 0,20 % |
| Volatilité | | 1,3 % | 1,3 % |
| Exsudation | | 0 % | 0 % |
| Viscosité plastique | | 0,90 Pa.s à 2344 Pa | 0,90 Pa.s à 2344 Pa |
| Pression de $H_2$ en mm Hg, Absorption d'$H_2$ en ml/g | à T = 0 h | 403 mm Hg (0) | 402 mm Hg (0) |
| | à T = 48 h | 402 mm Hg (0) | 295 mm Hg (1,78) |

Tableau 2b

| Exemples | Ex. 10 | Ex. 11 |
|---|---|---|
| Rapport pondéral catalyseur/PGD | 0,08 | 0,12 |
| Catalyseur (% pondéral) | $Pd / Al_2O_3$ ; 0,40 % | $Pd / Al_2O_3$ ; 0,60 % |
| Volatilité | 1,9 % | 1,9 % |
| Exsudation | 0 % | 0 % |
| Viscosité plastique | 0,90 Pa.s à 2344 Pa | 0,90 Pa.s à 2344 Pa |
| Pression de $H_2$ en mm Hg, Absorption d'$H_2$ en ml/g) | à T = 0 h | 403 mm Hg (0) | 402 mm Hg (0) |
| | à T = 48 h | 244 mm Hg (2,59) | 173 mm Hg (3,78) |

Tableau 2c

| Exemples | Ex. 12 | Témoin sans PGD |
|---|---|---|
| Rapport pondéral catalyseur/PGD | 0,06 | 8 |
| Catalyseur (% pondéral) | $Pd / Al_2O_3$ ; 0,30 % | $Pd / Al_2O_3$ ; 0,60 % |
| Volatilité | 1,43 % | 1,17 % |
| Exsudation | 0 % | 0 % |
| Viscosité plastique | 0,90 Pa.s à 2344 Pa | 0,90 Pa.s à 2344 Pa |
| Pression de $H_2$ en mm Hg, Absorption d'$H_2$ en ml/g) | à T = 0 h | 401 mm Hg (0) | 405 mm Hg (0) |
| | à T = 48 h | 221 mm Hg (2,97) | 321 mm Hg (1,39) |

Les exemples des tableaux 3a à 3c sont obtenus à partir d'une graisse modèle constituée de :

- 10 % en poids d 'une huile végétale (HLB 0.5),
- 3.8 % en poids d'un polymère viscosant (Shellvis™ 40),
- 6.5% en poids de silice hydrophile (Cab-O-Sil™ TS720),
- 0% à 0,3% de catalyseur palladium supporté sur alumine
- q.s.p. 100 % de poly alpha - oléfine (PAO)

Dans tous les cas où le rapport pondéral catalyseur/PGD est supérieur à 0.01, les quantités d'hydrogène absorbées en 48h sont supérieures à celles absorbées par le témoin ne contenant pas de phase dispersante tout en contenant 0.6% de catalyseur.

Tableau 3a

| Exemples | Témoin | Ex. 13 |
|---|---|---|
| Rapport pondéral catalyseur/PGD | 0 | 0,01 |
| Catalyseur (% pondéral) | 0 % | $Pd / Al_2O_3$ ; 0,10 % |
| Volatilité | 1,8 % | 1,8 % |
| Exsudation | 0 % | 0 % |
| Viscosité plastique | 0,87 Pa.s à 2550 Pa | 0,89 Pa.s à 2556 Pa |
| Absorption d'$H_2$ en ml/g | à T = 0 h | 0 | 0 |
| | à T = 48 h | 0.05 | 0.98 |

Tableau 3b

| Exemples | | Ex. 14 | Ex. 15 |
|---|---|---|---|
| Rapport pondéral catalyseur/PGD | | 0,02 | 0,03 |
| Catalyseur (% pondérai) | | Pd / Al$_2$O$_3$ ; 0,20 % | Pd / Al$_2$O$_3$ ; 0,30 % |
| Volatilité | | 1,8 % | 1,8 % |
| Exsudation | | 0 % | 0 % |
| Viscosité plastique | | 0,88 Pa.s à 2550 Pa | 0,87 Pa.s à 2560 Pa |
| Absorption d'H$_2$ en ml/g | à T = 0 h | 0 | 0 |
| | à T = 48 h | 1.9 | 2.3 |

Tableau 3c

| Exemples | | Ex. 16 | Témoin sans PGD |
|---|---|---|---|
| Rapport pondéral catalyseur/PGD | | 0,06 | 8 |
| Catalyseur (% pondéral) | | Pd / Al$_2$O$_3$ ; 0,60 % | Pd / Al$_2$O$_3$ ; 0,60 % |
| Volatilité | | 1,8 % | 1,17 % |
| Exsudation | | 0 % | 0 % |
| Viscosité plastique | | 0,83 Pa.s à 2394 Pa | 0,90 Pa.s à 2344 Pa |
| Absorption d'H$_2$ en ml/g) | à T = 0 h | 0 | 0 |
| | à T = 48 h | 2 | 1.4 |

**Revendications**

1. Composition **caractérisée en ce qu'**elle comprend un composé ou un mélange de composés hydrocarbonés et/ou siliconés, une proportion non nulle d'un ou de plusieurs métaux de transition et une proportion non nulle d'au moins une phase grasse liquide dispersante légèrement polaire, ayant une ou plusieurs chaînes hydrocarbonées, de HLB compris entre 0.5 et 9, de préférence entre 4 et 9.

2. Composition telle que définie à la revendication 1, **caractérisée en ce que** le composé ou le mélange de composés hydrocarbonés et/ou siliconés est choisi parmi les hydrocarbures, les polymères hydrocarbonés, les huiles de silicone et/ou les dérivés de polyols.

3. Composition telle que définie à l'une des revendications 1 ou 2, **caractérisée en ce qu'**elle comprend 50% à 90% en poids de composé ou de mélange de composés hydrocarbonés et/ou siliconés.

4. Composition telle que définie à l'une des revendications 1 à 3, **caractérisée en ce que** le polymère hydrocarboné est choisi parmi les poly-alpha oléfines, le polyisobutène, les copolymères propylène - éthylène, propylène - butène et propylène - hexène, les terpolymères propylène - butène - éthylène ou les polybutadiènes

5. Composition telle que définie à l'une des revendications 1 à 4, **caractérisée en ce que** les huiles de silicones sont choisies parmi les poly(alkyl siloxanes), et en particulier parmi les poly (diméthyl siloxanes) de hauts poids moléculaires.

6. Composition telle que définie à l'une des revendications 1 à 5, **caractérisée en ce que** les dérivés de polyols sont choisis parmi ceux obtenus par éthérication ou estérification d'un composé ayant plusieurs fonctions hydroxyle, comme par exemple le glycérol, le TMP ou le bisphénol, au moyen de chaînes grasses hydrocarbonées ou alkoxydes tels que polyéthylène glycol, le polypropylène glycol ou polybutylèneglycol.

7. Composition telle que définie à l'une quelconque des revendications 1 à 6, **caractérisée en ce qu'**elle comprend un ou plusieurs catalyseurs métalliques en une proportion pondérale allant jusqu'à 5% en poids.

8. Composition telle que définie à la revendication 7 **caractérisée en ce que** le catalyseur métallique est choisi parmi les métaux de transitions, les sels organiques des métaux de transition ou les composés organométalliques desdits métaux.

9. Composition telle que définie à la revendication 8, **caractérisée en ce que** le catalyseur métallique est choisi parmi la poudre de palladium, la poudre de platine, la poudre de nickel, le fer pentacarbonyle, l'acide chloroplatinique, le chromite ce cuivre, le nickel Raney, le palladium supporté sur charbon actif, le palladium supporté sur alumine, le platine supporté sur alumine ou le platine supporté sur charbon actif

10. Composition telle que définie à la revendication 9, **caractérisée en ce qu'**elle comprend jusqu'à 1% en poids de palladium supporté sur alumine ou sur charbon actif.

11. Composition telle que définie à l'une quelconque des revendications 1 à 10, **caractérisée en ce qu'**elle comprend jusqu'à 15% en poids de silice hydrophile.

12. Composition telle que définie à l'une quelconque des revendications 1 à 8, **caractérisée en ce qu'**elle comprend jusqu'à 5% environ d'un- polymère viscosant.

13. Composition telle que définie à l'une quelconque des revendications 1 à 12, **caractérisée en ce qu'**elle comprend jusqu'à 2% environ d'un agent antioxydant.

14. Composition telle que définie à l'une quelconque des revendications 1 à 13, **caractérisée en ce que** la phase grasse liquide dispersante légèrement polaire, ayant une ou plusieurs chaînes hydrocarbonées, de HLB compris entre 0.5 et 9, de préférence entre 4 et 9 est liquide à température ambiante.

15. Composition telle que définie à l'une quelconque des revendications 1 à 14, **caractérisée en ce qu'**elle comprend de 1% à 20% et de préférence, entre 5% et 10% en poids de phase grasse dispersante.

16. Composition telle que définie à l'une quelconque des revendications 1 à 15, **caractérisée en ce que** le rapport pondéral entre le ou les catalyseurs métalliques et la phase grasse dispersante dans la composition, est compris entre environ 0,01 et 0,20.

17. Composition telle que définie à l'une quelconque des revendications 1 à 16, **caractérisée en ce que** la phase grasse dispersante est choisie parmi les huiles végétales.

18. Composition telle que définie à l'une quelconque des revendications 1 à 16, **caractérisée en ce que** la phase grasse dispersante est choisie parmi les esters méthyliques d'huiles végétales, les monoglycérides ou les diglycérides obtenus par hydrolyse ménagée des huiles végétales, les huiles végétales faiblement alcoxylées, en particulier faiblement éthoxylées et/ou propoxylées, et plus particulièrement, les huiles végétales éthoxylées contenant de 1 à 10 motifs d'oxyde d'éthylène, les esters méthyliques d'huiles végétales faiblement alcoxylées, en particulier faiblement éthoxylées et/ou propoxylées, et plus particulièrement, les esters méthyliques d'huiles végétales éthoxylés avec 1 à 4 oxydes d'éthylène.

19. Composition telle que définie à l'une des revendications 17 ou 18, **caractérisée en ce que** l'huile végétale est choisie parmi l'huile de tournesol, l'huile de colza, l'huile de maïs, l'huile de soja, l'huile de ricin, l'huile de lin, l'huile de coprah, l'huile d'arachide, l'huile d'olive, l'huile de palme ou l'huile de palme hydrogénée.

20. Composition telle que définie à l'une quelconque des revendications 1 à 16, **caractérisée en ce que** la phase grasse dispersante est choisie parmi les agents tensioactifs ayant un nombre HLB compris entre 1 et 9, de préférence entre 4 et 9, miscibles aux huiles qui entrent dans la composition des graisses.

21. Composition telle que définie à la revendication 20, **caractérisée en ce que** la phase grasse dispersante est choisie parmi les alcools gras ou les acides gras linéaires ou ramifiés, comportant de 5 à 30 atomes de carbone, et plus particulièrement de 12 à 22 atomes de carbone, les esters desdits acides, lesdits alcools, acides ou esters étant éventuellement faiblement alkoxylés.

**22.** Composition telle que définie à la revendication 21, **caractérisée en ce que** la phase grasse dispersante est choisie parmi les agents tensioactifs liquides à température ambiante.

**23.** Composition telle que définie à la revendication 22, **caractérisée en ce que** la phase grasse dispersante est choisie parmi les agents tensioactifs éventuellement faiblement alkoxylés et comportant une chaîne oléique, oléocétylique, linoléique ou béhènique.

**24.** Composition telle que définie à la revendication 23, **caractérisée en ce que** la phase grasse dispersante est choisie parmi les esters oléiques de sorbitan, les alcools oléiques éthoxylés contenant de 1 à 5 motifs d'oxyde d'éthylène, les oléates de polyéthylèneglycol (PEG), contenant de 1 à 5 motifs d'oxyde d'éthylène ou les éthers de glucose liquides, les acides oléiques éthoxylés contenant de 1 à 5 motifs d'oxyde d'éthylène.

**25.** Procédé d'obtention de la composition telle que définie à l'une des revendications 1 à 24, **caractérisé en ce qu'**il comprend une étape de dispersion du catalyseur dans l'agent dispersant, suivie du mélange de la dispersion dans les autres constituants de la composition.

**26.** Utilisation de la composition telle que définie à l'une des revendications 1 à 24, comme composition de remplissage de câbles à fibres optiques.

| | Office européen des brevets | RAPPORT DE RECHERCHE EUROPEENNE | Numéro de la demande EP 01 40 1725 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 466 230 A (PIRELLI CAVI SPA) 15 janvier 1992 (1992-01-15) * revendications; figures * | 1-4, 20-24 | B01J31/26 B01J20/22 G02B6/44 |
| Y | US 5 162 418 A (CHAKRABARTI PARITOSH M ET AL) 10 novembre 1992 (1992-11-10) | 1-4, 20-24 | |
| A | * revendications; figures * | 15 | |
| Y | US 4 609 590 A (SUZUKI TOSHIO ET AL) 2 septembre 1986 (1986-09-02) | 1 | |
| A | * revendications; figures * | 5,8,9 | |
| Y | PATENT ABSTRACTS OF JAPAN vol. 2000, no. 07, 29 septembre 2000 (2000-09-29) & JP 2000 119531 A (SUMITOMO BAKELITE CO LTD), 25 avril 2000 (2000-04-25) * abrégé * | 1 | |
| A | DE 43 34 689 A (OLSCHEWSKI MAX ;OLSCHEWSKI BRIGITTE DR (DE)) 6 avril 1995 (1995-04-06) * revendications; figures * | 1,14,15, 17-20 | DOMAINES TECHNIQUES RECHERCHES (Int.Cl.7) B01J G02B |
| A | DE 198 31 073 A (WACKER CHEMIE GMBH) 13 janvier 2000 (2000-01-13) * revendications; figures * | 1,26 | |
| A,D | US 4 741 592 A (SECCO ALESSANDRO ET AL) 3 mai 1988 (1988-05-03) * revendications; figures * | 1 | |
| A,D | EP 0 632 301 A (PIRELLI CAVI SPA) 4 janvier 1995 (1995-01-04) * revendications; figures * | 1 | |
| | -/-- | | |

Le présent rapport a été établi pour toutes les revendications

| Lieu de la recherche | Date d'achèvement de la recherche | Examinateur |
|---|---|---|
| LA HAYE | 18 septembre 2001 | Faderl, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

**Office européen des brevets**

## RAPPORT DE RECHERCHE EUROPEENNE

Numéro de la demande

EP 01 40 1725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | GB 2 144 559 A (BICC PLC) 6 mars 1985 (1985-03-06) * revendications; figures * --- | 1 | |
| A,D | US 4 688 889 A (PASINI FRANCO ET AL) 25 août 1987 (1987-08-25) * revendications; figures * --- | 1 | |
| A,D | FR 2 607 311 A (BP CHIMIE SA) 27 mai 1988 (1988-05-27) * revendications; figures * ----- | 1 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 18 septembre 2001 | Faderl, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 1 170 056 A1

**ANNEXE AU RAPPORT DE RECHERCHE EUROPEENNE**
**RELATIF A LA DEMANDE DE BREVET EUROPEEN NO.**

EP 01 40 1725

18-09-2001

| Document brevet cité au rapport de recherche | | | Date de publication | Membre(s) de la famille de brevet(s) | | | Date de publication |
|---|---|---|---|---|---|---|---|
| EP | 0466230 | A | 15-01-1992 | IT | 1246761 | B | 26-11-1994 |
| | | | | AU | 639119 | B2 | 15-07-1993 |
| | | | | AU | 8010491 | A | 02-01-1992 |
| | | | | BR | 9102889 | A | 28-04-1992 |
| | | | | CA | 2045928 | A1 | 03-01-1992 |
| | | | | DE | 69114194 | D1 | 07-12-1995 |
| | | | | DE | 69114194 | T2 | 25-07-1996 |
| | | | | DK | 466230 | T3 | 11-03-1996 |
| | | | | EP | 0466230 | A1 | 15-01-1992 |
| | | | | ES | 2082114 | T3 | 16-03-1996 |
| | | | | JP | 4231355 | A | 20-08-1992 |
| | | | | MX | 9100064 | A1 | 28-02-1992 |
| | | | | NO | 301798 | B1 | 08-12-1997 |
| | | | | NZ | 238821 | A | 27-04-1994 |
| | | | | US | 5140664 | A | 18-08-1992 |
| US | 5162418 | A | 10-11-1992 | WO | 9207901 | A1 | 14-05-1992 |
| US | 4609590 | A | 02-09-1986 | JP | 1828850 | C | 15-03-1994 |
| | | | | JP | 4025228 | B | 30-04-1992 |
| | | | | JP | 60255649 | A | 17-12-1985 |
| | | | | CA | 1253755 | A1 | 09-05-1989 |
| | | | | DE | 3584266 | A1 | 07-11-1991 |
| | | | | EP | 0164238 | A2 | 11-12-1985 |
| | | | | KR | 9210094 | B1 | 14-11-1992 |
| JP | 2000119531 | A | 25-04-2000 | AUCUN | | | |
| DE | 4334689 | A | 06-04-1995 | DE | 4334689 | A1 | 06-04-1995 |
| | | | | AT | 144440 | T | 15-11-1996 |
| | | | | DE | 59400905 | D1 | 28-11-1996 |
| | | | | WO | 9509691 | A1 | 13-04-1995 |
| | | | | EP | 0671973 | A1 | 20-09-1995 |
| DE | 19831073 | A | 13-01-2000 | DE | 19831073 | A1 | 13-01-2000 |
| US | 4741592 | A | 03-05-1988 | IT | 1184428 | B | 28-10-1987 |
| | | | | AT | 66010 | T | 15-08-1991 |
| | | | | AU | 584409 | B2 | 25-05-1989 |
| | | | | AU | 5559386 | A | 16-10-1986 |
| | | | | BR | 8601501 | A | 09-12-1986 |
| | | | | CA | 1262715 | A1 | 07-11-1989 |
| | | | | DE | 3680700 | A1 | 12-09-1991 |
| | | | | EP | 0200914 | A1 | 12-11-1986 |
| | | | | ES | 554221 | D0 | 01-07-1987 |
| | | | | ES | 8706766 | A1 | 16-09-1987 |

EPO FORM P0460

**EP 1 170 056 A1**

**ANNEXE AU RAPPORT DE RECHERCHE EUROPEENNE
RELATIF A LA DEMANDE DE BREVET EUROPEEN NO.**

EP 01 40 1725

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-09-2001

| Document brevet cité au rapport de recherche | | | Date de publication | Membre(s) de la famille de brevet(s) | | | Date de publication |
|---|---|---|---|---|---|---|---|
| US 4741592 | A | | | ES | 554222 | D0 | 16-03-1989 |
| | | | | ES | 8900203 | A1 | 16-05-1989 |
| | | | | GR | 860946 | A1 | 04-08-1986 |
| | | | | JP | 61251808 | A | 08-11-1986 |
| | | | | MX | 169177 | B | 24-06-1993 |
| | | | | NO | 861419 | A ,B, | 13-10-1986 |
| | | | | NZ | 215689 | A | 27-07-1989 |
| EP 0632301 | A | 04-01-1995 | | IT | 1264902 | B1 | 17-10-1996 |
| | | | | AU | 671911 | B2 | 12-09-1996 |
| | | | | AU | 6591594 | A | 12-01-1995 |
| | | | | BR | 9402216 | A | 14-03-1995 |
| | | | | CA | 2126426 | A1 | 30-12-1994 |
| | | | | CN | 1111358 | A | 08-11-1995 |
| | | | | DE | 69402765 | D1 | 28-05-1997 |
| | | | | DE | 69402765 | T2 | 13-11-1997 |
| | | | | EP | 0632301 | A1 | 04-01-1995 |
| | | | | ES | 2102729 | T3 | 01-08-1997 |
| | | | | IL | 109954 | A | 18-02-1997 |
| | | | | JP | 7027954 | A | 31-01-1995 |
| | | | | NZ | 260808 | A | 26-07-1996 |
| | | | | US | 5455881 | A | 03-10-1995 |
| GB 2144559 | A | 06-03-1985 | | GB | 2144878 | A | 13-03-1985 |
| | | | | GB | 2144879 | A ,B | 13-03-1985 |
| US 4688889 | A | 25-08-1987 | | IT | 1177317 | B | 26-08-1987 |
| | | | | AU | 576019 | B2 | 11-08-1988 |
| | | | | AU | 4937885 | A | 29-05-1986 |
| | | | | BR | 8505864 | A | 13-05-1986 |
| | | | | CA | 1245848 | A1 | 06-12-1988 |
| | | | | DE | 3541212 | A1 | 28-05-1986 |
| | | | | ES | 549801 | D0 | 01-05-1987 |
| | | | | ES | 8705644 | A1 | 16-07-1987 |
| | | | | FR | 2573878 | A1 | 30-05-1986 |
| | | | | GB | 2167424 | A ,B | 29-05-1986 |
| | | | | GR | 852810 | A1 | 19-03-1986 |
| | | | | JP | 61143706 | A | 01-07-1986 |
| | | | | MX | 167587 | B | 31-03-1993 |
| | | | | MX | 9205451 | A1 | 31-03-1994 |
| | | | | NL | 8503039 | A | 16-06-1986 |
| | | | | NO | 854678 | A ,B, | 26-05-1986 |
| | | | | NZ | 214140 | A | 29-03-1989 |
| | | | | SE | 462219 | B | 21-05-1990 |
| | | | | SE | 8505418 | A | 24-05-1986 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 01 40 1725

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

18-09-2001

| Document brevet cité au rapport de recherche | Date de publication | Membre(s) de la famille de brevet(s) | Date de publication |
|---|---|---|---|
| FR 2607311 A | 27-05-1988 | FR 2607311 A1 | 27-05-1988 |

EPO FORM P0460